# EUROPÄISCHE PATENTSCHRIFT

(11) **EP 1 618 977 B1**
(45) Veröffentlichungstag und Bekanntmachung des Hinweises auf die Patenterteilung: **23.01.2008**
(21) Anmeldenummer: 05106767.6
(22) Anmeldetag: 22.07.2005
(51) Int. Cl.: B23B 31/22

(54) **Werkzeugaufnahme**
Tool holder
Porte-outil

(30) Priorität: 23.07.2004 DE 102004035873
(43) Veröffentlichungstag der Anmeldung: 25.01.2006
(73) Patentinhaber: HILTI Aktiengesellschaft, 9494 Schaan (LI)
(72) Erfinder: Hartmann, Markus, 87665, Mauerstetten (DE); Noser, Martin, 9487, Gamprin (LI); Sanchen, Günther, 9472, Grabs (LI)
(74) Vertreter: Wildi, Roland

(56) Entgegenhaltungen:
- WO-A-95/32830
- WO-A-96/35535
- US-A- 5 988 957
- US-A- 6 126 370
- PATENT ABSTRACTS OF JAPAN Bd. 017, Nr. 229 (M-1406), 11. Mai 1993 (1993-05-11) & JP 04 360703 A (FUMIO KATO), 14. Dezember 1992 (1992-12-14)

## Beschreibung

Die Erfindung betrifft eine Werkzeugaufnahme eines Handwerkzeuggerätes, insbesondere eines Diamantbohrgerätes. Die Werkzeugaufnahme ist mit einer motorisch antreibbaren Spindel des Handwerkzeuggerätes rotatorisch gekoppelt. Ferner weist die Werkzeugaufnahme eine Festlegeanordnung auf, an der ein auswechselbares Werkzeug über einen Schaftabschnitt mit kreisrundem Querschnitt axial und rotatorisch festlegbar ist.

Derartige Werkzeugaufnahmen ermöglichen die Verwendung von Werkzeugen, deren Schaft eine kreiszylindrische Form aufweist. Hierdurch kann das Handwerkzeuggerät mit einer Vielzahl handelsüblicher Werkzeuge, wie beispielsweise Bohrerbits und insbesondere Diamantbohrern, verwendet werden. Dabei können die für das Handwerkzeuggerät vorgesehenen Werkzeuge durch die einfache Form des Schaftes mit relativ niedrigen Herstellungskosten produziert werden.

Aus der WO96/35535 ist ein Schnellspannfutter bekannt, an dem ein Werkzeug sowohl radial als auch axial festlegbar ist. Hierzu weist das Schnellspannfutter eine Klemmeinrichtung auf, die mehrere Klemmwalzen vorsieht, die in entsprechenden Aufnahmen einer Trägerhülse gehalten sind. Die Trägerhülse ist innerhalb einer Betätigungshülse angeordnet, die an ihrer Innenseite für jede Klemmwalze jeweils einen Rampenbereich ausformt. Durch Verdrehen der Betätigungshülse gegenüber der Trägerhülse werden die Klemmwalzen mittels der Rampenbereiche teilweise aus den Aufnahmen heraus in eine Längsbohrung der Trägerhülse gedrückt. Dabei wird ein zuvor in die Längsbohrung eingeschobener Werkzeugschaft durch die Klemmwalzen festgeklemmt. Um die Klemmwalzen in dieser Sperrstellung zu halten, wird die Betätigungshülse an der Trägerhülse form- oder reibschlüssig festgelegt.

Aus der WO 95/32830 ist ein Schnellspannfutter bekannt, an dem ein Werkzeug sowohl radial als auch axial fest leghan ist. Hierzu weist das Spannfutter eine Klemmeinrichtung auf, die Klemmwolzen vorsieht, sowie über eine zusätzliche Kugel-Klemmung eine axiale Sicherung des werkzeugs bewirkt.

Ein Vorteil des bekannten Schnellspannfutters ist, dass die Klemmeinrichtung sowohl zur Übertragung der Drehbewegung als auch zur axialen Festlegung des Werkzeuges dient. Die axiale Festlegung erfolgt dabei unabhängig davon, ob das Schnellspannfutter rotiert oder steht.

Nachteilig an der bekannten Werkzeugaufnahme ist, dass der Aufbau, insbesondere durch die zu gewährleistende Festlegung der Betätigungshülse an der Trägerhülse, relativ komplex ist. Hierdurch ist die Werkzeugaufnahme einerseits relativ störanfällig und andererseits nur mit hohen Herstellungskosten produzierbar. Zudem kann durch die vorgegebene Position der Betätigungshülse gegenüber der Trägerhülse in der Sperrstellung nur ein Schaftabschnitt mit einem bestimmten Durchmesser an der Werkzeugaufnahme festgelegt werden. Ferner erfordert das Festlegen der Betätigungshülse gegenüber der Trägerhülse einen relativ grossen Kraft- und Zeitaufwand.

Der vorliegenden Erfindung liegt die Aufgabe zugrunde, bei einem Schnellspannfutter zur Aufnahme eines im Querschnitt kreisrunden Schaftabschnittes die genannten Nachteile zu vermeiden und bei sicherer drehfester und axialer Festlegung des Werkzeuges ein schnelles Anbringen und Entfernen desselben zu ermöglichen.

Erfindungsgemäss wird die Aufgabe dadurch gelöst, dass die Festlegeanordnung eine Klemmeinrichtung zur axialen Festlegung des Schaftabschnittes und eine davon getrennte Drehmitnahme zur Übertragung der Drehbewegung auf das Werkzeug aufweist, zwischen denen ein Rotationslager zur rotatorischen Trennung der Klemmeinrichtung von der Drehmitnahme angeordnet ist. Hierdurch wird das Drehmoment auch bei Auftreten eines gewissen Schlupfes nur durch die Drehmitnahme und nicht über die Klemmeinrichtung übertragen. Auf diese Weise wird die Beanspruchung der Klemmeinrichtung im Wesentlichen auf die axialen Haltekräfte reduziert, die bei ruhender Spindel an dem zuhaltenden Werkzeug auftreten. Diese minimierte Beanspruchung ermöglicht die Verwendung einer besonders einfach zu betätigenden und kostengünstig herzustellenden Klemmeinrichtung, die ein schnelles Wechseln des Werkzeuges ermöglicht.

Vorteilhafterweise ist das Rotationslager durch ein Wälzlager gebildet, was einerseits eine sichere rotatorische Trennung und andererseits eine stabile axiale Verbindung zwischen der Klemmeinrichtung und der Drehmitnahme ermöglicht.

In einer besonders bevorzugten Ausführungsform weist die Drehmitnahme einen Hülsenfreilauf auf, der in einer Drehrichtung der Spindel selbsttätig sperrt. Hierdurch wird der im Querschnitt kreisrunde Schaftabschnitt bei angetriebener Spindel automatisch an der Werkzeugaufnahme festgeklemmt. Diese Vorgehensweise ist besonders geeignet für Anwendungen mit hoher Drehzahl und nur geringem Drehmoment, wie beispielsweise Diamantbohren. Der Hülsenfreilauf gewährleistet dabei eine sehr genaue Zentrierung des Werkzeuges und vermindert dadurch schädliche Unwuchten. Ferner ist für derartige Anwendungen die selbsttätig hergestellte reibschlüssige Verbindung zwischen dem Hülsenfreilauf und dem Schaftabschnitt vollkommen ausreichend, um das im Betrieb auftretende Drehmoment bei lediglich geringem Schlupf übertragen zu können. Bei stehender Spindel übertragen die Klemmwalzen des Hülsenfreilaufes dagegen nur minimale Haltekräfte, so dass das Werkzeug besonders leicht wieder von der Werkzeugaufnahme entfernt werden kann.

Vorteilhafterweise weist die Klemmeinrichtung ein elastisches Klemmelement auf, das eine Durchtrittsöffnung zur Aufnahme des Schaftabschnittes ausformt, die im unbelasteten Zustand des Klemmelementes einen geringeren Durchmesser aufweist als der Querschnitt des Schaftabschnittes. Auf diese Weise wird die Klemmeinrichtung beim Einstecken des Werkzeuges in die Werkzeugaufnahme selbsttätig aktiviert, wodurch ein besonders einfaches und schnelles Festlegen des Werkzeuges an der Werkzeugaufnahme ermöglicht wird.

Bevorzugterweise ist das Klemmelement durch einen O-Ring gebildet, wodurch die Klemmeinrichtung besonders kostengünstig herstellbar ist. Zudem wird die Klemmeinrichtung bei dieser Ausbildung gleichzeitig als Dichtung genutzt, die das Innere der Werkzeugaufnahme gegen Aussen abdichtet.

Alternativ hierzu ist das Klemmelement durch eine Tellerfeder gebildet. Dies ermöglicht bei geringem benötigtem Bauraum eine besonders stabile axiale Festlegung des Werkzeuges an der Werkzeugaufnahme.

Dabei weist die Klemmeinrichtung vorteilhafterweise eine Entsperreinrichtung auf, durch die die Tellerfeder in eine Freigabestellung verbringbar ist. Hierdurch ist ein schnelles und wenig kraftaufwändiges Entfernen des Werkzeuges von der Werkzeugaufnahme möglich.

Dabei ist es besonders günstig, wenn die Entsperreinrichtung durch eine verschiebbare Hülse gebildet ist, die über einen ringförmigen Bereich um die Durchtrittsöffnung herum gegen die Tellerfeder gedrückt werden kann. Auf diese Weise wird beim Entsperren der Klemmeinrichtung ein Verkanten der Tellerfeder mit dem Schaftabschnitt des Werkzeuges vermieden. Somit kann das Werkzeug besonders leicht von der Werkzeugaufnahme entfernt werden.

Die Erfindung wird nachstehend anhand eines Ausführungsbeispieles näher erläutert. Es zeigen:
- Fig. 1: einen Längsschnitt durch eine erfindungsgemässe Werkzeugaufnahme,
- Fig. 2a: einen vergrösserten Detailschnitt durch eine Klemmeinrichtung der Werkzeugaufnahme im Bereich II nach Fig. 1 bei entferntem Werkzeug in einer Festlegestellung,
- Fig. 2b: einen vergrösserten Detailschnitt durch eine Klemmeinrichtung der Werkzeugaufnahme im Bereich II nach Fig. 1 bei eingestecktem Werkzeug in einer Freigabestellung,
- Fig. 3: einen Längsschnitt durch eine alternative Klemmeinrichtung und
- Fig. 4: einen Querschnitt in der Ebene IV-IV durch eine Drehmitnahme der Werkzeugaufnahme nach Fig. 1.

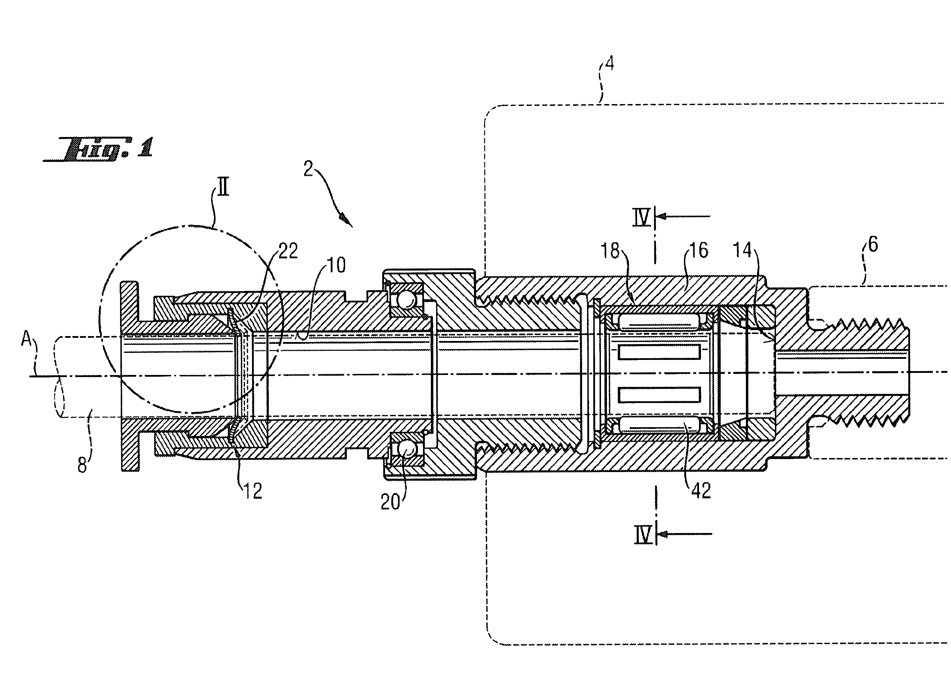

Fig. 1 zeigt eine insgesamt mit 2 bezeichnete Werkzeugaufnahme, die an einem Gerätehals eines gestrichelt angedeuteten Handwerkzeuggerätes 4, wie beispielsweise eines Diamantbohrgerätes, angebracht ist. Die Werkzeugaufnahme 2 ist mit einer motorisch antreibbaren Spindel 6 des Handwerkzeuggerätes 4 drehfest verbunden, so dass sie von der Spindel 6 in eine Rotationsbewegung um eine Achse A versetzt werden kann.

Die Werkzeugaufnahme 2 weist eine Längsbohrung 10 auf, in die ein gestrichelt dargestellter Schaftabschnitt 8 eines nicht näher dargestellten auswechselbaren Werkzeuges, wie beispielweise eines Diamantbohrers, eingeschoben werden kann. Der Schaftabschnitt 8 weist über die gesamte in die Längsbohrung 10 einschiebbare Länge einen kreisrunden Querschnitt auf.

An einem von der Spindel 6 abgewandten werkzeugseitigen Ende der Längsbohrung 10 ist eine Klemmeinrichtung 12 vorgesehen, mit der der Schaftabschnitt 8 in axialer Richtung an der Werkzeugaufnahme 2 festlegbar ist. An einem gegenüberliegenden spindelseitigen Ende der Längsbohrung 10 ist ein Anschlag 14 für den Schaftabschnitt 8 ausgeformt, der durch ein Gehäuse 16 der Werkzeugaufnahme 2 gebildet wird. Neben diesem Anschlag 14 ist eine Drehmitnahme 18 angeordnet, die zur rotationsfesten Verbindung zwischen der Werkzeugaufnahme 2 und dem Schaftabschnitt 8 dient. Die Klemmeinrichtung 12 und die Drehmitnahme 18 bilden somit zusammen eine Festlegeanordnung, mittels derer das jeweilige zu benutzende Werkzeug über dessen im Querschnitt kreisrunden Schaftabschnitt 8 vollständig in der Werkzeugaufnahme 2 festgelegt werden kann.

Zwischen der Klemmeinrichtung 12 und der Drehmitnahme 18 ist ein Rotationslager 20 in Form eines Kugellagers angeordnet, das die Klemmeinrichtung 12 rotatorisch von der Drehmitnahme 18 entkoppelt, so dass im Betrieb auch bei Schlupf an der Drehmitnahme 18 keine Übertragung der Drehbewegung durch die Klemmeinrichtung 12 auf den Schaftabschnitt 8 erfolgt.

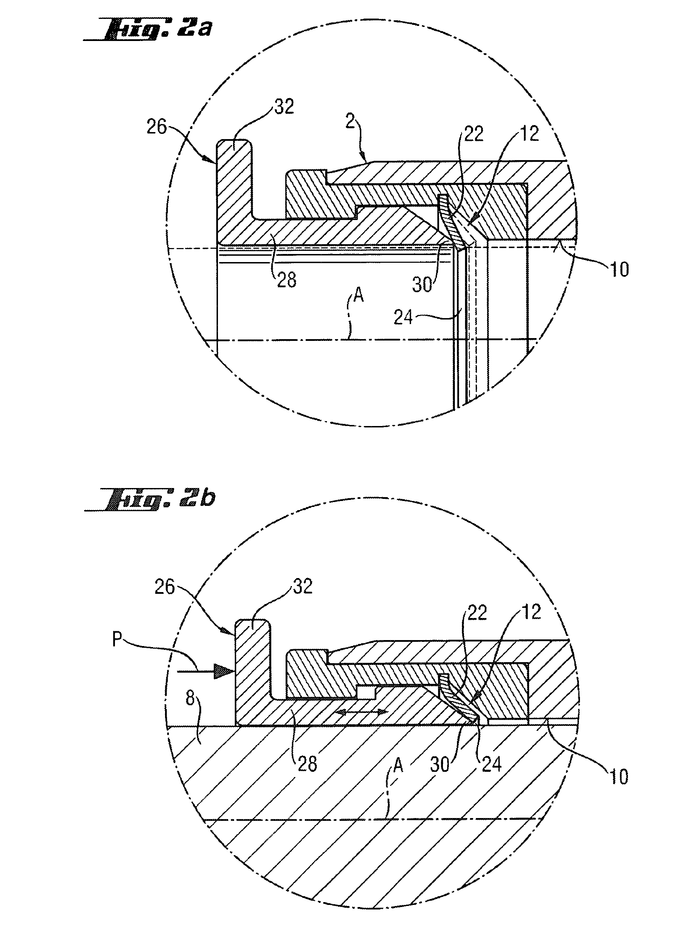

Fig. 2a zeigt in vergrösserter Schnittdarstellung den oberen Teil der Klemmeinrichtung 12. Diese weist ein Klemmelement in Form einer Tellerfeder 22 auf. Diese bildet eine Durchtrittsöffnung 24 aus, die im dargestellten unbelasteten Zustand der Tellerfeder 22 einen geringeren Durchmesser aufweist als der Schaftabschnitt 8 und die weitestgehend an diesen angepasste Längsbohrung 10. Somit ragt die Tellerfeder 22 im unbelasteten Zustand umlaufend in die Längsbohrung 10 hinein.

Wenn der Schaftabschnitt 8, wie gestrichelt dargestellt, in die Längsbohrung 10 eingeschoben wird, wird die Durchtrittsöffnung 24 auf den Durchmesser des Schaftabschnittes 8 aufgeweitet, wobei die Tellerfeder 22 nun umlaufend gegen den Schaftabschnitt 8 drückt und ihn auf diese Weise in axialer Richtung der Werkzeugaufnahme 2 festlegt.

Um den Schaftabschnitt 8 wieder aus der Längsbohrung 10 heraus schieben zu können, beispielsweise um das eingesteckte Werkzeug gegen ein anders auszutauschen, ist eine Entsperreinrichtung 26 vorgesehen. Diese besteht im Wesentlichen aus einer Hülse 28, die am werkzeugseitigen Ende der Längsbohrung 10 teleskopartig verschiebbar gehalten ist. Die Hülse 28 ragt dabei in die Längsbohrung 10 hinein und liegt um die Durchtrittsöffnung 24 herum mit einem Stirnbereich 30 ringförmig an der Tellerfeder 22 an. Auf einer von dem Stirnbereich 30 abgewandten Seite weist die Hülse 28 einen von Aussen zugänglichen Betätigungsabschnitt 32 auf.

Wie aus Fig. 2b zu entnehmen ist, kann die Hülse 28 durch Aufbringen einer Druckkraft P am Betätigungsabschnitt 32 in Richtung des spindelseitigen zweiten Endes der Längsbohrung 10 in diese hinein verschoben werden. Dabei drückt der Stirnbereich 30 gegen die Tellerfeder 22 und sorgt dadurch für eine weitere Aufweitung der Durchtrittsöffnung 24, deren Durchmesser nun geringfügig grösser ist als der Durchmesser des Schaftabschnittes 8. In dieser Freigabestellung der Tellerfeder 22 kann der Schaftabschnitt 8 folglich ohne grösseren Widerstand aus der Längsbohrung 10 herausgezogen werden.

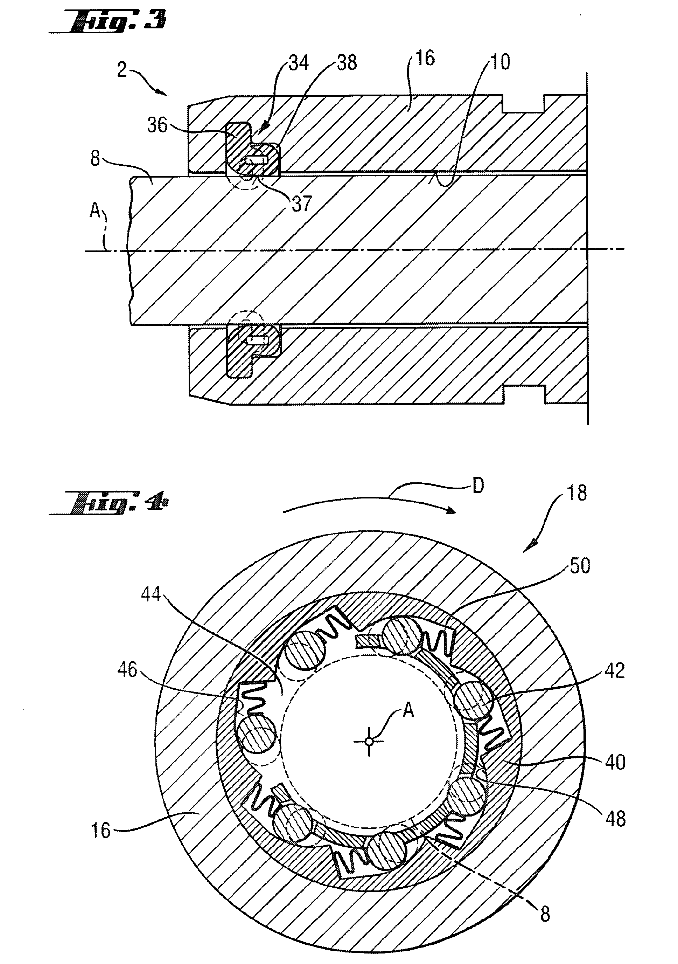

In Fig. 3 ist eine alternative Klemmeinrichtung 34 dargestellt. Diese besteht im Wesentlichen aus einem in das Gehäuse 16 der Werkzeugaufnahme 2 eingelassenen O-Ring 36. Dieser ragt im unbelasteten Zustand in die Längsbohrung 10 hinein, wie gestrichelt dargestellt. Beim Einschieben des Schaftabschnittes 8 in die Längsbohrung 10 wird der O-Ring 36 wie dargestellt aus der Längsbohrung 10 heraus in eine ringförmige Ausnehmung 38 gedrückt und dessen Durchtrittsöffnung 37 aufgeweitet. Hierdurch treten am O-Ring 36 Rückverformungskräfte auf, mit denen der O-Ring 36 umlaufend gegen den Schaftabschnitt drückt. Die Rückverformungskräfte sind dabei ausreichend gross, um das Werkzeug über dessen Schaftabschnitt 8 bei jeder Ausrichtung des Gerätehalses 4 entgegen der Schwerkraft sicher in der Werkzeugaufnahme 2 halten zu können.

In Fig. 4 ist die Drehmitnahme 18 vergrössert dargestellt. Diese ist im Wesentlichen durch einen Hülsenfreilauf 40 gebildet, der in einer Drehrichtung D der Werkzeugaufnahme 2 sperrt, die der Drehrichtung der Spindel 6 entspricht. Hierzu weist der Hülsenfreilauf 40 mehrere walzenförmige Abrollelemente 42 auf, die bei eingestecktem Schaftabschnitt 8 in einem Ringspalt 44 zwischen einer Innenseite 46 des Hülsenfreilaufes 40 und dem Schaftabschnitt 8 angeordnet sind. Jedem Abrollelement 42 ist dabei jeweils ein Rampenabschnitt 48 zugeordnet, der von der Innenseite 46 nach innen geneigt ist. Hierdurch wird der Ringspalt 44 auf der zur Drehrichtung D entgegen gesetzten Seite jedes Abrollelementes 42 verengt.

Sobald die Spindel 6 und damit auch die Werkzeugaufnahme 2 rotatorisch in Drehrichtung D angetrieben wird, verlagern sich die Abrollelemente 42 zu den Rampenabschnitten 48 hin und werden auf diesen nach Innen geleitet, wie gestrichelt dargestellt. Hierbei verklemmen die Abrollelemente 42 in dem verengten Ringspalt 44 zwischen dem Hülsenfreilauf 40 und dem Schaftabschnitt 8 und sorgen dadurch für dessen rotatorischen Antrieb in Drehrichtung D.

An jedem der Rampenabschnitte 48 stützt sich zudem ein Federelement 50 ab, das jeweils eines der Abrollelemente 42 in Richtung eines benachbarten Rampenabschnittes 48 drückt. Diese Federelemente 50 sorgen dafür, dass die Abrollelemente 50 bei einer Rotationsbewegung der Werkzeugaufnahme in Drehrichtung D möglichst schnell zwischen dem Hülsenfreilauf 40 und dem Schaftabschnitt 8 eingeklemmt werden.

Sobald die Spindel 6 nicht mehr rotatorisch angetrieben wird, sind die Haltekräfte der Abrollelemente 42 auf den Schaftabschnitt 8 nur noch gering, so dass dieser problemlos aus der Werkzeugaufnahme herausgezogen werden kann.

## Patentansprüche

1. Werkzeugaufnahme (2) eines Handwerkzeuggerätes (4),
die mit einer motorisch antreibbaren Spindel (6) des Handwerkzeuggerätes (4) rotatorisch gekoppelt ist und
die eine Festlegeanordnung aufweist, an der ein auswechselbares Werkzeug über einen Schaftabschnitt (8) mit kreisrundem Querschnitt axial und drehfest festlegbar ist,
**dadurch gekennzeichnet, dass** die Festlegeanordnung eine Klemmeinrichtung (12; 34) und eine davon getrennte Drehmitnahme (18) aufweist, zwischen denen ein Rotationslager (20) zur rotatorischen Trennung der Klemmeinrichtung (12; 34) von der Drehmitnahme (18) angeordnet ist.

2. Werkzeugaufnahme nach Anspruch 1, **dadurch gekennzeichnet, dass** das Rotationslager (20) durch ein Wälzlager gebildet ist.

3. Werkzeugaufnahme nach Anspruch 1 oder 2, **dadurch gekennzeichnet, dass** die Drehmitnahme (18) einen Hülsenfreilauf (40) aufweist, der in einer Drehrichtung (D) der Spindel (6) selbsttätig sperrt.

4. Werkzeugaufnahme nach einem der Ansprüche 1 bis 3, **dadurch gekennzeichnet, dass** die Klemmeinrichtung (12; 34) ein elastisches Klemmelement aufweist, das eine Durchtrittsöffnung (24; 37) zur Aufnahme des Schaftabschnittes (8) ausformt, die im unbelasteten Zustand des Klemmelementes einen geringeren Durchmesser aufweist als der Querschnitt des Schaftabschnittes (8).

5. Werkzeugaufnahme nach einem der Ansprüche 1 bis 3, **dadurch gekennzeichnet, dass** das elastische Klemmelement durch einen O-Ring (36) gebildet ist.

6. Werkzeugaufnahme nach einem der Ansprüche 1 bis 3, **dadurch gekennzeichnet, dass** das elastische Klemmelement durch eine Tellerfeder (22) gebildet ist.

7. Werkzeugaufnahme nach Anspruch 5, **dadurch gekennzeichnet, dass** die Klemmeinrichtung (12) eine Entsperreinrichtung (26) aufweist, durch die die Tellerfeder (22) in eine Freigabestellung verbringbar ist.

8. Werkzeugaufnahme nach Anspruch 6, **dadurch gekennzeichnet, dass** die Entsperreinrichtung (26) durch eine verschiebbare Hülse (28) gebildet ist, die über einen ringförmigen Bereich (30) um die Durchtrittsöffnung (24) herum gegen die Tellerfeder (22) gedrückt werden kann.

## Claims

1. A tool holder (2) of a hand tool device (4),
which is rotatably coupled to a motor driven spindle (6) of the hand tool device (4), and
which has a fixing arrangement to which a replaceable tool can be fixed axially and in a rotatably fixed manner over a shank section (8) of circular cross-section,
**characterised in that** the fixing arrangement has a clamping device (12; 34) and a rotary driver (18) separate from it, between which is arranged a rotary bearing (20) for the rotatory separation of the clamping device (12; 34) from the rotary driver (18).

2. The tool holder according to Claim 1, **characterised in that** the rotary bearing (20) is formed by a rolling bearing.

3. The tool holder according to Claim 1 or 2, **characterised in that** the rotary driver (18) has a sleeve free wheel (40) which automatically locks in one direction of rotation (D) of the spindle (6).

4. The tool holder according to one of Claims 1 to 3, **characterised in that** the clamping device (12; 34) has an elastic clamping element which forms a through opening (24; 37) for receiving the shank section (8), which opening, in the unloaded condition of the clamping element, has a smaller diameter than the cross-section of the shank section (8).

5. The tool holder according to one of Claims 1 to 3, **characterised in that** the elastic clamping element is formed by an O ring (36).

6. The tool holder according to one of Claims 1 to 3, **characterised in that** the elastic clamping element is formed by a cup spring (22).

7. The tool holder according to Claim 5, **characterised in that** the clamping device (12) has a release device (26) by means of which the cup spring (22) can be brought into a release position.

8. The tool holder according to Claim 6, **characterised in that** the release device (26) is formed by a displaceable sleeve (28) which can be pushed against the cup spring (22) over an annular region (30) around the through opening (24).

## Revendications

1. Raccord d'outil (2) d'un appareil portatif (4), ledit raccord d'outil étant couplé en rotation à une broche à entraînement motorisé (6) de l'appareil portatif (4) et comportant un agencement d'assujettissement qui permet d'assujettir axialement et de manière solidaire en rotation un outil échangeable par l'intermédiaire d'une portion de tige (8) à section transversale circulaire, **caractérisé en ce que** l'agencement d'assujettissement comporte un dispositif de serrage (12 ; 34) et un moyen d'entraînement en rotation (18) qui en est séparé, un palier rotatif (20) étant disposé entre eux pour séparer en rotation le dispositif de serrage (12 ; 34) du moyen d'entraînement en rotation (18).

2. Raccord d'outil selon la revendication 1, **caractérisé en ce que** le palier rotatif (20) est formé par un palier à roulement.

3. Raccord d'outil selon la revendication 1 ou 2, **caractérisé en ce que** le moyen d'entraînement en rotation (18) comporte une douille de roue libre (40) qui réalise un blocage automatique dans un sens de rotation (D) de la broche (6).

4. Raccord d'outil selon une des revendications 1 à 3, **caractérisé en ce que** le dispositif de serrage (12 ; 34) comporte un élément de serrage élastique qui, pour recevoir la portion de tige (8), crée une ouverture traversante (24 ; 37) présentant, à l'état non chargé de l'élément de serrage, un diamètre inférieur à la section transversale de la portion de tige (8).

5. Raccord d'outil selon une des revendications 1 à 3, **caractérisé en ce que** l'élément de serrage élastique est formé par un joint torique (36).

6. Raccord d'outil selon une des revendications 1 à 3, **caractérisé en ce que** l'élément de serrage élastique est formé par un ressort-diaphragme (22).

7. Raccord d'outil selon la revendication 5, **caractérisé en ce que** le dispositif de serrage (12) comporte un dispositif de déblocage (26) permettant d'amener le ressort-diaphragme (22) dans une position libérée.

8. Raccord d'outil selon la revendication 6, **caractérisé en ce que** le dispositif de déblocage (26) est formé par un manchon coulissant (28) qui, par l'intermédiaire d'une zone annulaire (30), peut être poussé contre le ressort-diaphragme (22) autour de l'ouverture traversante (24).
